# EUROPEAN PATENT APPLICATION

(11) **EP 1 928 176 A2**
(43) Date of publication of application: **04.06.2008**
(21) Application number: 07023271.5
(22) Date of filing: 30.11.2007
(51) Int. Cl.: H04N 7/15, H04N 7/173

(54) **Image display system**

(30) Priority: 01.12.2006 JP 2006325770
(71) Applicant: Funai Electric Co., Ltd., Daito-shi, Osaka 574-0013 (JP)
(72) Inventor: Tsubota, Hirono, Daito-shi Osaka 574-0013 (JP); Masaki, Yasuo, Daito-shi Osaka 574-0013 (JP); Okazaki, Akinori, Daito-shi Osaka 574-0013 (JP); Kokado, Masao, Daito-shi Osaka 574-0013 (JP); Murakami, Sadanori, Daito-shi Osaka 574-0013 (JP); Zuo, Guokun, Daito-shi Osaka 574-0013 (JP); Takeshita, Masahiro, Daito-shi Osaka 574-0013 (JP)
(74) Representative: Grünecker, Kinkeldey, Stockmair & Schwanhäusser Anwaltssozietät

(57) **Abstract**

An image display system allowing a plurality of users to enjoy viewing programs is provided. The image display system includes a plurality of television sets connected to the Internet, and an IP telephone management server. The IP telephone management server has a friend list as data including information about television sets allowing communications via IP telephones in a memory. The friend list includes identification numbers of the television sets connected to the IP telephone management server, IP addresses of the television sets and numbers of channels selected in the television sets. Information (e.g., the number of the selected channel and the user of the television set) representing images displayed on each television is transmitted as a viewing history to the IP telephone management server to prepare or update data items in the friend list.

## Description

### BACKGROUND OF THE INVENTION

### Field of the Invention

The present invention relates to an apparatus displaying images, and particularly to an image display system having a plurality of devices connected via communication lines.

### Description of the Background Art

Television receivers having communications capabilities have been proposed. These receivers can display images based on the received signals, and further can transmit information.

Accordingly, for example, Japanese Patent Laying-Open No. 2004-040698 has disclosed a broadcast receiver by which a viewer can find out a chat partner or companion during watching of a television as well as a chat system for television programs.

Japanese Patent Laying-Open No. 2006-197001 has disclosed a terminal device that achieves communications between viewers of programs.

Further, Japanese Patent Laying-Open No. 2002-152264 has disclosed a technology for offering a multi-conversation service to only limited viewers among viewers who are viewing the same contents using a content distribution service, and specifically to only limited viewers who wish to have fun in a large group.

However, the technology disclosed in Japanese Patent Laying-Open No. 2004-040698 requires personal computers in addition to the television receivers, and viewers may be required to perform complicated operations.

According to the technology disclosed in Japanese Patent Laying-Open No. 2006-197001, the television viewer who intends to perform multi-conversations must keep a telephone at hand. Therefore, the viewer who does not keep the telephone at hand cannot perform communications.

Further, according to the technology disclosed in Japanese Patent Laying-Open No. 2002-152264, only the viewers viewing the same contents can have fun in viewing.

### SUMMARY OF THE INVENTION

The invention has been made for overcoming the above problem, and an object of the invention is to provide an image display system that can simplify operations required of each viewer for enjoying image viewing.

Another object of the invention is to provide an image display system in which a viewer of images can simply perform speech communications with another viewer.

Still another object is to provide an image display system in which a viewer can easily know a situation of another viewer.

Yet another object is to provide an image display system in which a situation of a specific viewer(s) can be easily determined.

Further another object is to provide an image display system in which each of viewers not viewing the same image can have fun.

In summary, for achieving the above objects, an image display system according to an aspect of the invention includes a first television receiver, a second television receiver, and a communication control device connected to the first and second television receivers via a communication line. The first television receiver includes a communication unit configured to perform transmission or reception of a signal to or from the communication control device according to a predefined communications protocol, a display unit configured to display an image, a storing unit configured to store first device information identifying the first television receiver and registry information identifying a user of the first television receiver, an input unit configured to accept input of an operation instruction, and a transmission controller configured to control the communication unit to transmit the first device information, the registry information and channel information specifying a channel selected for displaying an image on the display unit to the communication control device. The communication control device includes a communication unit configured to transmit or receive a signal to or from the first or second television receiver according to the predefined communications protocol, a first obtaining unit configured to obtain the first device information, the registry information and the channel information from the signal received from the first television receiver, and a storing unit configured to store the first device information, the registry information and the channel information in a correlated fashion. The second television receiver includes a communication unit configured to transmit or receive a signal to or from the communication control device according to the predefined communications protocol, a storing unit configured to store the first device information identifying the first television receiver, second device information identifying the second television receiver and position data for specifying a position of the second television receiver on the communication line, an input unit configured to accept input of an obtaining instruction for information representing a display situation of an image of the first television receiver, and a producing unit configured to produce a transmission request for the information representing the display situation in response to the input of the obtaining instruction. The transmission request includes the first device information. The second television receiver includes a transmission controller configured to control the communication unit to transmit the position data and the transmission request to the communication control device according to the communications protocol. The communication control device further includes a second obtaining unit configured to obtain the transmission request and the position data from the signal received by the second television receiver, a reading unit configured to read the registry information and the channel information from the storing unit based on the first device information included in the obtained transmission request, and a transmission controller configured to control the communication unit to transmit the registry information and the channel information to the second television receiver based on the position data. The second television receiver further includes an obtaining unit configured to obtain the registry information and the channel information from the signal transmitted from the communication control device, and a display unit configured to display the registry information and a channel selected in the first television receiver.

An image display system according to another aspect of the invention includes a first television receiver, and a second television receiver. Each of the first and second television receivers is connected to a communication control device via a communication line. The communication control device performs communications with the first or second television receiver according to a predefined communications protocol. The first television receiver includes a communication unit configured to perform transmission or reception of a signal to or from the communication control device according to the communications protocol, a display unit configured to display an image, a storing unit configured to store first device information identifying the first television receiver and registry information identifying a user of the first television receiver, an input unit configured to accept input of an operation instruction, and a transmission controller configured to control the communication unit to transmit the first device information, the registry information and channel information specifying a channel selected for displaying an image on the display unit to the communication control device. The communication control device obtains the first device information, the registry information and the channel information from the signal received from the first television receiver, and stores the first device information and the channel information in a correlated fashion. The second television receiver includes a communication unit configured to transmit or receive a signal to or from the communication control device according to a predefined communications protocol, a storing unit configured to store the first device information identifying the first television receiver, second device information identifying the second television receiver and position data for specifying a position of the second television receiver on the communication line, an input unit configured to accept input of an obtaining instruction for information representing a display situation of an image of the first television receiver, and a producing unit configured to produce a transmission request for the information representing the display situation in response to the input of the obtaining instruction. The transmission request includes the first device information. The second television receiver includes a transmission controller configured to control the communication unit to transmit the position data and the transmission request to the communication control device according to the communications protocol. The communication control device further obtains the transmission request and the position data from the signal received by the second television receiver, and transmits the registry information and the channel information to the second television receiver based on the first device information included in the transmission request and the position data. The second television receiver further includes an obtaining unit configured to obtain the registry information and the channel information from the signal transmitted from the communication control device, and a display unit configured to display the registry information and the channel information.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a schematic structure of an image display system 1 according to an embodiment of the invention.
Fig. 2 conceptually illustrates a structure of a frame 200 transmitted from a television set 10 to an IP telephone management server 50.
Fig. 3 conceptually illustrates a structure of a frame 300 transmitted from IP telephone management server 50 to a television set 20.
Fig. 4 is a block diagram illustrating configurations of functions achieved by IP telephone management server 50.
Fig. 5 is a block diagram showing a hardware structure of a computer system 500 functioning as IP telephone management server 50.
Fig. 6 conceptually illustrates a form of storage of data in a hard disk 550 employed in computer system 500.
Fig. 7 is a block diagram illustrating configurations of functions achieved by television set 10.
Fig. 8 is a block diagram showing a hardware structure of television set 10.
Fig. 9 conceptually illustrates a form of data storage in memory 812.
Fig. 10 is a block diagram illustrating functions achieved by television set 20.
Fig. 11 is a block diagram showing a hardware structure of television set 20.
Fig. 12 conceptually illustrates a form of data storage in a memory 1112.
Fig. 13 conceptually illustrates data of a face image stored in a memory 1152.
Fig. 14 is a block diagram illustrating configurations of functions achieved by a remote control 30.
Fig. 15 shows an external appearance of remote control 30.
Fig. 16 is a flowchart illustrating a part of processing executed by a CPU 510 of computer system 500 functioning as IP telephone management server 50.
Fig. 17 is a flowchart illustrating partially a series of processing executed for distributing information from IP telephone management server 50 to respective televisions.
Fig. 18 is a flowchart illustrating partially a series of operations executed by a CPU 810 of television set 10.
Fig. 19 illustrates a form of data storage of processing executed by a television according to a third embodiment of the invention.
Fig. 20 is a flowchart illustrating partially a series of operations executed by television set according to a third embodiment of the invention.
Fig. 21 illustrates switching on a screen for displaying images on two channels by television set 10.
Fig. 22 is a flowchart illustrating partially a series of operations executed by television set 10.
Fig. 23 is a flowchart illustrating partially a series of operations executed by television set 10 according to a fourth embodiment of the invention.
Fig. 24 illustrates a structure of a frame 2400 transmitted from television set 10 to IP telephone management server 50.
Fig. 25 illustrates a form of storage of data in a hard disk 550 employed in computer system 500.
Fig. 26 is a flowchart illustrating a series of operations executed by a television set that received a comment from IP telephone management server 50.
Fig. 27 illustrates switching of display on a display 1130 of television set 20 according to the fourth embodiment of the invention.

### DESCRIPTION OF THE PREFERRED EMBODIMENTS

Embodiments of the invention will now be described with reference to the drawings. In the following description, the same parts bear the same reference numbers and the same names, and perform the same functions. Therefore, description thereof is not repeated.

### <First Embodiment>

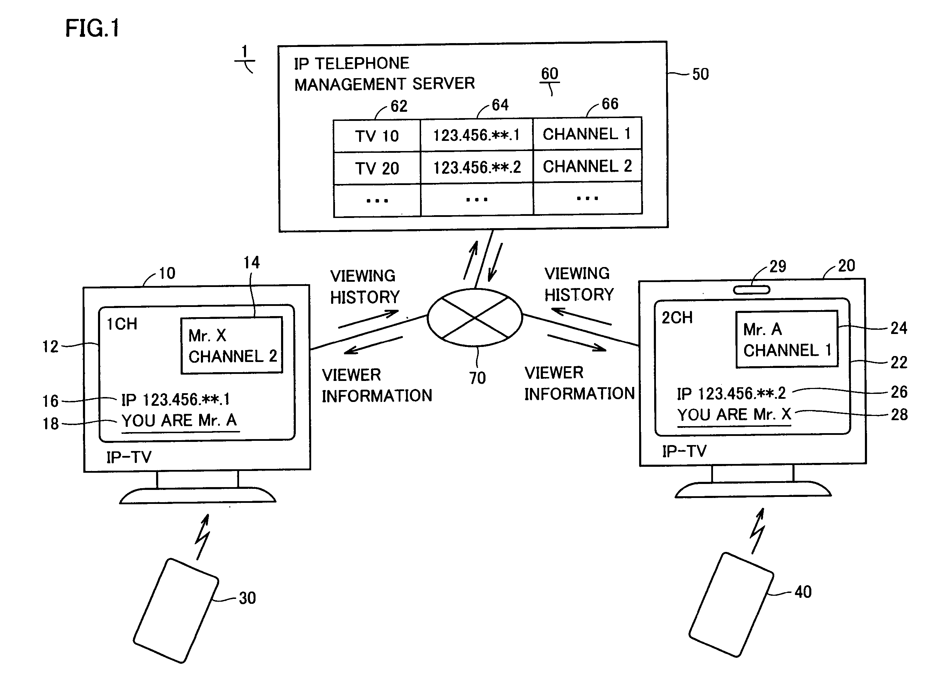

Referring first to Fig. 1, an image display system 1 according to an embodiment of the invention will now be described. Fig. 1 shows a schematic structure of image display system 1. Image display system 1 includes television sets 10 and 20, and an IP (Internet Protocol) telephone management server 50. Television sets 10 and 20 as well as IP telephone management server 50 are connected over the Internet 70.

Television set 10 is controlled by a control signal emitted from a remote control 30. Television set 10 displays images and/or characters in an image display region 12. In an example shown in Fig. 1, television set 10 displays images on a channel 1, an IP (Internet Protocol) address 16 of television set 10, a message 18 representing a user of television set 10 and a sub-screen 14 for displaying images on a channel selected in television set 20.

Television set 20 is controlled by a control signal emitted from a remote control 40. Television set 20 displays image and/or character information in an image display region 22. In the example shown in Fig. 1, television set 20 displays an image on a channel 2 selected by the user, an IP address 26 of television set 20, a message 28 representing a user of television set 20 and a sub-screen 24 corresponding to the channel displayed on television set 10. Television set 20 further includes a camera 29 that takes pictures of a subject to provide an image signal.

IP telephone management server 50 has a memory storing a friend list 60 as data including information about the television sets allowing communications via the IP telephone. Friend list 60 includes IDs (Identification) 62 of the television sets connected to IP telephone management server 50, IP addresses 64 of these television sets and numbers 66 of channels selected in these television sets.

In image display system 1, the information (e.g., the numbers of the selected channel and the television set users) representing the images displayed on television set 10 or 20 is transmitted as a history of viewing to IP telephone management server 50. This history is used for preparing and updating data items in friend list 60.

Information about each television set connected to IP telephone management server 50 is transmitted as viewer information from IP telephone management server 50 to respective television sets 10 and 20.

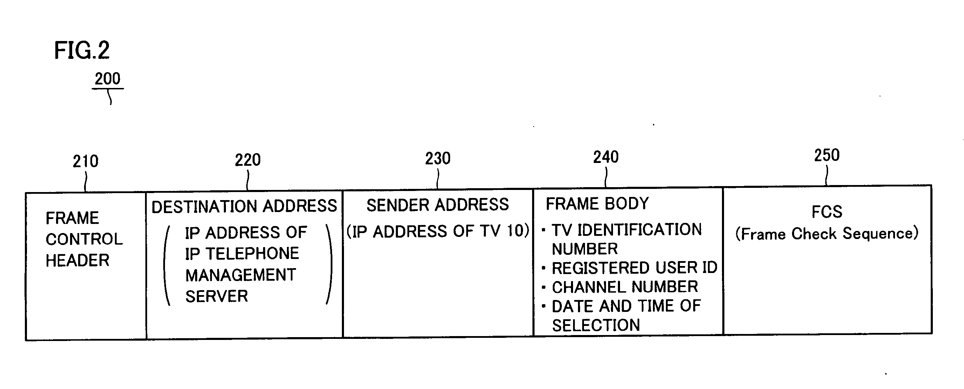

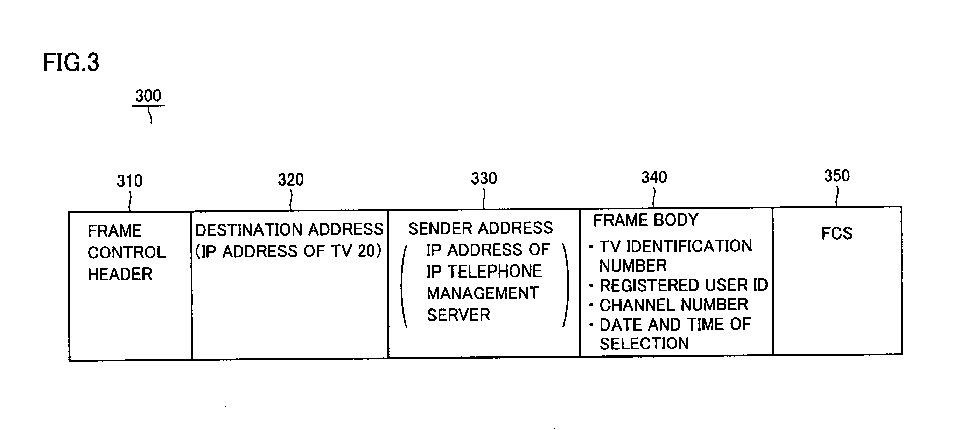

Referring to Figs. 2 and 3, data communications in image display system 1 will now be described. Fig. 2 conceptually illustrates a structure of a frame 200 transmitted to IP telephone management server 50. Frame 200 includes a frame control header 210, a destination address 220, a sender address 230, a frame body 240 and an FCS (Frame Check Sequence) 250.

Destination address 220 is specifically an IP address of IP telephone management server 50. When television set 10 transmits frame 200, sender address 230 is the IP address of television set 10. Frame body 240 includes a television identification number, a registered user ID, a channel number and data about date and time of selection. The television identification number is peculiar data assigned to television set 10. The television identification number is, e.g., a production number of television set 10, and is assigned by a manufacturer. In another aspect, the television identification number may be data prepared by IP telephone management server 50.

The registered user ID is the identification number stored as the user of television set 10 in television set 10. When the user peculiar to television set 10 is not registered, "NULL" is stored as the registered user ID instead of specific data.

The channel number represents the channel (channel 1 in the example of Fig. 1) selected in television set 10. The data of selected date and time represents the date and time of selection of this channel.

Fig. 3 conceptually illustrates a structure of frame 300 transmitted from IP telephone management server 50 to television set 20. Frame 300 includes a frame control header 310, a destination address 320, a sender address 330, a frame body 340 and an FCS 350. Destination address 320 is the IP address of television set 20. Sender address 330 is the IP address of IP telephone management server 50. Frame body 340 includes a television identification number, a registered user ID, a channel number, and date and time of selection. The items included in frame body 340 correspond to the items included in frame body 240 illustrated in Fig. 2. When IP telephone management server 50 transmits frame 300 having the above structure to television set 20, television set 20 can obtain the viewer information of television set 10. The data items included in frame 300 are stored in the memory of television set 20.

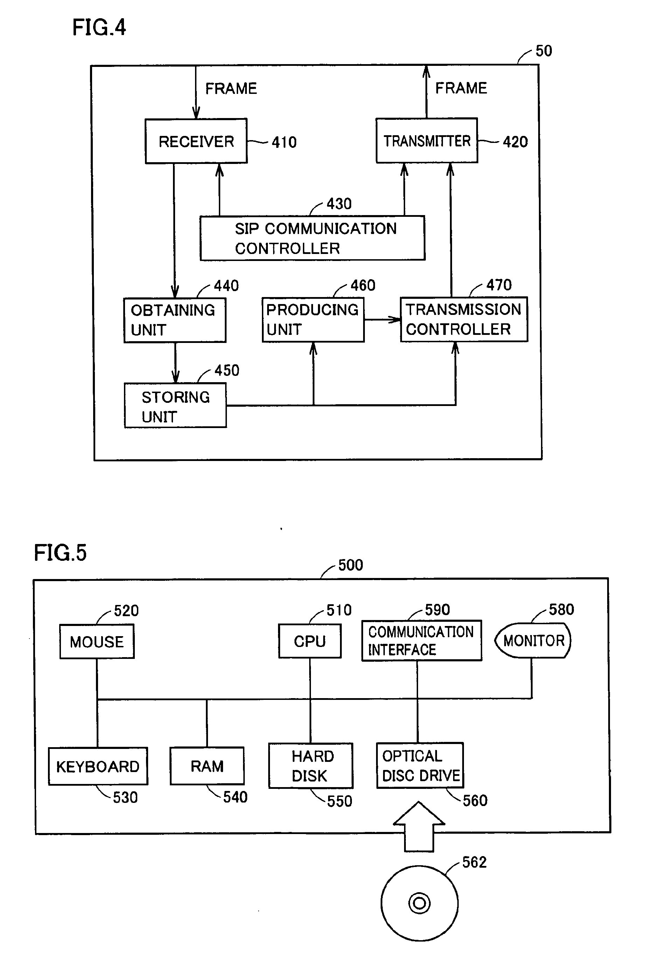

Referring to Fig. 4, description will now be given on the structure of IP telephone management server 50 according to this embodiment. Fig. 4 is a block diagram illustrating configurations of functions performed by IP telephone management server 50. IP telephone management server 50 includes a receiver 410, a transmitter 420, an SIP (Session Initiation Protocol) communication controller 430, an obtaining unit 440, a storing unit 450, a producing unit 460 and a transmission controller 470.

Receiver 410 is connected to the Internet 70, and configured to receive the frames transmitted from television sets 10 and 20.

Transmitter 420 is connected to the Internet 70, and configured to transmit the frame produced in IP telephone management server 50 to television set 10 or 20.

SIP communication controller 430 is configured to control the communications performed by receiver 410 and transmitter 420 according to the session initiation protocol.

From the signals received from television set 10 or 20, obtaining unit 440 is configured to obtain the ID thereof, the registered user ID, the channel number and the date and time of selection, and stores them in storing unit 450. In another aspect, obtaining unit 440 configured to obtain specific data items from the received frame in addition to the foregoing data items. The items thus obtained include, e.g., other information transmitted from the respective television sets and/or a request for transmission of the data stored in IP telephone management server 50.

Storing unit 450 stores data obtained by obtaining unit 440 and data entered by a manager of IP telephone management server 50. More specifically, storing unit 450 stores the IDs of the television sets, the registered user IDs, the channel numbers, and the date and time of selection in a correlated fashion. The data items thus stored include the IP addresses of the respective television sets as shown in Fig. 1.

Producing unit 460 is configured to produce the data to be transmitted to the respective television sets based on the data stored in storing unit 450. More specifically, in response to the transmission request obtained by obtaining unit 440, producing unit 460 reads the television ID, the user ID, the channel number and the date and time of selection from storing unit 450, and produces the data having the items thus read. The produced data corresponds to frame body 240.

Based on IP address 64 stored in storing unit 450, transmission controller 470 is configured to produce the data for transmitting frame body 240 produced by producing unit 460 to the television set that transmitted the above transmission signal request, and send the produced data to transmitter 420. Transmitter 420 transmits frame 300 to the Internet 70.

Referring to Fig. 5, a form of the specific structure of IP telephone management server 50 will now be described. Fig. 5 is a block diagram illustrating a hardware structure of a computer system 500 functioning as IP telephone management server 50. As major components, computer system 500 includes a CPU 510 executing programs, a set of a mouse 520 and a keyboard 530 accepting input of instructions by a user of computer system 500, a RAM (Random Access Memory) 540 nonvolatilely storing data produced by executing the program by CPU 510 or data entered via mouse 520 or keyboard 530, a hard disk 550 nonvolatilely storing the data, an optical disc drive 560, a monitor 580 and a communications interface (IF) 590. Each piece of the hardware is connected to the others by a data bus. A CD-ROM (Compact Disc-Read Only Memory) 562, a DVD (Digital Versatile Disc) or the like is loaded into optical disc drive 560.

The processing in computer system 500 is realized by the software executed by the hardware and CPU 510. Hard disk 550 may store in advance such software. The software may be distributed in a form stored in CD-ROM 562 or another storage medium. Further, so-called information providers connected to the Internet may provide the software as a program that can be downloaded. The above software is read from its storage medium by optical disc drive 560 or another reader, or is downloaded, and then the software is temporarily stored on hard disk 550. CPU 510 reads the software from hard disk 550, and stores it in RAM 540 in a form of an executable program. CPU 510 executes the program thus stored.

Computer system 500 shown in Fig. 5 is formed of general components. Therefore, it can be considered that the most essential part of the invention is the software that is stored in RAM 540, hard disk 550, CD-ROM 562 or another storage medium, or can be downloaded over the network. Since operations of the hardware of computer system 500 is well known, description thereof is not repeated.

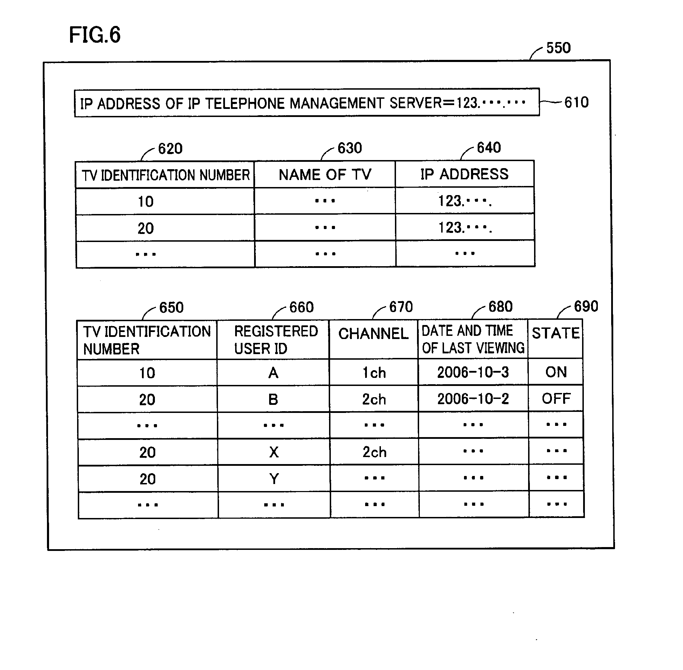

Referring to Fig. 6, the data structure of IP telephone management server 50 will now be described. Fig. 6 conceptually illustrates a form of data storage in hard disk 550 arranged in computer system 500 that functions as the server. Hard disk 550 has a plurality of areas for data storage.

The IP address of IP telephone management server 50 is stored in an area 610. The identification numbers of the television sets forming image display system 1 is stored in an area 620. Names of these television sets (i.e., the names that can be recognized by the television set users) is stored in an area 630. The IP addresses of the television sets is stored in an area 640.

The hard disk further stores the friend list, which is formed of the data stored in areas 650 - 690. More specifically, the identification number of the television set is stored in an area 650. The ID of the user registered for the television set in question is stored in an area 660. The number representing the channel that is selected in the television set is stored in an area 670. The date and time of last selection of the channel stored in area 670 is stored in an area 680. The data representing whether the channel in area 680 is currently selected or not is stored in an area 690. The data stored in areas 660 - 680 are data transmitted as the viewer information in frame 200 (Fig. 2). When the same television set successively transmits frames 200, the data items in FCS 250 included in last received frame 200 are used as the newest updated data. In this case, the data stored in area 690 is processed such that a flag "ON" indicating that the data is valid is set for only the newest data record relating to the same television set, and the data record in question and the flag are associated. Flags "OFF" are assigned to other data items, and associated with them.

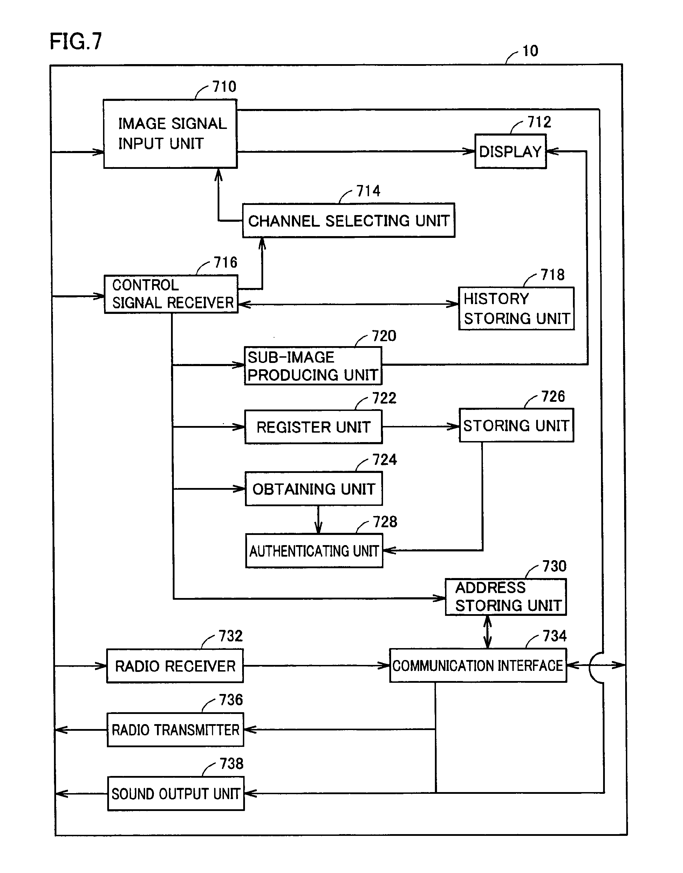

Referring to Fig. 7, television set 10 according to the embodiment will be described. Fig. 7 is a block diagram illustrating configurations of functions performed by television set 10. Television set 10 includes an image signal input unit 710, a display 712, a channel selector 714, a control signal receiver 716, a history recording unit 718, a sub-image producing unit 720, a register unit 722, an obtaining unit 724, an authenticating unit 728, a viewer information recording unit 726, an address storing unit 730, a radio receiver 732, a communication interface 734, a radio transmitter 736 and a sound output unit 738.

Image signal input unit 710 accepts input of image and/or sound signals applied externally to television set 10. For example, image signal input unit 710 accepts input of television broadcast signals received by an antenna.

Display unit 712 displays images based on the image signal. Channel selector 714 selects the channel of the image signal to be accepted by image signal input unit 710 based on the instruction applied to television set 10.

Control signal receiver 716 receives the signal emitted for controlling the operation of television set 10. For example, this signal is an infrared signal emitted from remote control 30.

History storing unit 718 stores a history of channel selection in television set 10. This history is included in the data received by control signal receiver 716. More specifically, history storing unit 718 stores the numbers of the selected channels as well as the data about the dates and times of entry of such selection instructions. History storing unit 718 is realized by a flash memory, a hard disk device or another nonvolatile memory.

Sub-image producing unit 720 produces a partial image displayed on display 712. The partial image is based on the signal obtained on the channel that is selected by the television set (e.g., television set 20) other than television set 10. When sub-image producing unit 720 sends the partial image thus produced to display 712, display 712 displays the images on the two channels.

Register unit 722 accepts input of the viewer information received by control signal receiver 716, and writes it in viewer information storing unit 726. More specifically, the viewer information includes the name of television set 10 or a specific user name registered as the user of television set 10.

When register unit 711 writes the viewer information in viewer information storing unit 726, the initial registration in television set 10 is completed.

Obtaining unit 724 obtains the information for specifying the user of television set 10 from the signal received by control signal receiver 716. For example, when a button operation is performed on remote control 30 to emit a signal corresponding to the button operation, control signal receiver 716 receives the emitted signal. From the received signal, obtaining unit 724 obtains the data (e.g., the numbers depressed on remote control 30) for specifying the user of remote control 30, and sends the obtained data to authenticating unit 728.

Authenticating unit 728 compares the information obtained by obtaining unit 724 with the data that is stored in advance in viewer information storing unit 726, and determines whether the user of television set 10 is the user registered in advance or not. A result of the determination by authenticating unit 728 is used for determining whether the history is to be stored in history storing unit 718 or not, and for determining whether the viewer information is to be transmitted to IP telephone management server 50 via communication interface 734 or not.

Address storing unit 730 stores the position information used for performing the data communications in image display system 1. More specifically, address storing unit 730 stores at least the IP address of IP telephone management server 50 and the IP address assigned to television set 10.

Radio receiver 732 receives the radio signal emitted from remote control 30. More specifically, when remote control 30 and television set 10 operate as an IP telephone, radio receiver 732 receives the sound signal emitted from remote control 30. Radio receiver 732 transmits the received signal to communication interface 734 for performing communications after conversion into the Internet protocol.

Communication interface 734 is connected to the Internet 70. Communication interface 734 produces a frame for transmitting data produced in television set 10 according to the Internet protocol, and transmits it to the designated address. Communication interface 734 further converts the sound signal received by radio receiver 732 into packet data, and transmits it as the data for the IP telephone communications to IP telephone management server 50.

Radio transmitter 736 modulates the packet data received by communication interface 734, and transmits it as a radio signal. When remote control 30 receives the radio signal, the signal is output as a sound uttered by the other party.

Sound output unit 738 provides the sound based on the sound signal that is taken out from the signal accepted by image signal input unit 710. Alternatively, when the packet received by communication interface 734 is not transmitted to radio transmitter 736, but is transmitted to sound output unit 738, the sound is output based on the data included in this packet. In this case, the user of television set 10 hears the voice output from a loud speaker of television set 10 instead of a sound to be output from remote control 30.

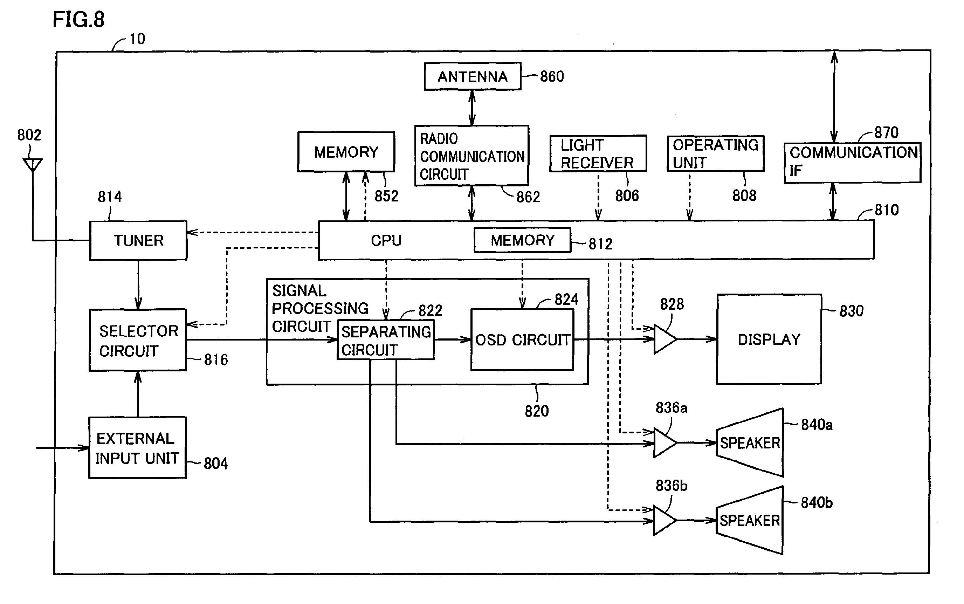

Referring to Fig. 8, a specific structure of television set 10 will now be described. Fig. 8 is a block diagram showing a hardware structure of television set 10. Television set 10 includes a tuner 814 connected to an antenna 802, an external input unit 804, a light receiver 806, an operating unit 808, a CPU 810, a selector circuit 816, a signal processing circuit 820, a display driver 828, a display 830, amplifiers 836a and 836b, speakers 840a and 840b, a memory 852, an antenna 860, a radio communication circuit 862 and a communication interface (I/F) 870. CPU 810 includes a memory 812. Signal processing circuit 820 includes a separating circuit 822 and an OSD (On Screen Display) circuit 824.

The broadcast signal received by antenna 802 is transmitted to tuner 814. Tuner 814 selects the channel instructed based on the control signal provided from CPU 810. External input unit 804 accepts input of externally provided image and sound signals. For example, external input unit 804 accepts the input of the image and sound signals transmitted from a VCR (Video Cassette Recorder), a DVD player or another image reproducing device. The image and sound signals are transmitted from external input unit 804 to selector circuit 816. External input unit 804 may be configured to accept the input of image signals independently of the input of sound signals, or may be configured to accept the input of each signal independently of the others.

Selector circuit 816 selectively outputs the signal provided from tuner 814 and the signal provided from external input unit 804 based on the selection instruction provided from CPU 810.

Television set 10 further includes memory 852 and communication interface (I/F) 870. Memory 852 is, e.g., a flash memory, and stores the operation history that is provided from CPU 810 and indicates user's operations performed on television set 10. A data structure in memory 852 will be described later. Communication interface 870 is connected to a network communications cable 102. Communication interface 870 performs communications with other information communications devices. The other information communications devices are, e.g., IP telephone management server 50, television set 20 and the like as shown in Fig. 1.

Further, television set 10 includes signal processing circuit 820, driver 828, display 830, amplifiers 836a and 836b, and speakers 840a and 840b. Signal processing circuit 820 includes separating circuit 822 and OSD (On Screen Display) circuit 824.

The signal output from selector circuit 816 enters separating circuit 822. Separating circuit 822 separates the image signal and the sound signal from each other based on the instruction provided from CPU 810. The image signal provided from separating circuit 822 enters OSD circuit 824. The sound signal provided from separating circuit 822 enters amplifiers 836a and 836b.

OSD circuit 824 produces a signal for displaying an image on display 830 based on the instruction provided from CPU 810. This image includes, e.g., a channel number and display of the channel selected by another television set 20 as well as character information such as the registered user name of television set 20 and other information. The character information includes display representing a sound level and display representing operations of television set 10. The display of representing operations include turning up and down of volume, change of contrast and the like.

More specifically, OSD circuit 824 combines the image signal provided from separating circuit 822 with the image signal produced based on the data that is stored in advance in memory 812, and provides the signal prepared by the combination to driver 828. Driver 828 executes the processing of displaying the image on display 830 based on the signal provided from OSD circuit 824.

Amplifiers 836a and 836b amplify the sound signals provided from separating circuit 822, and transmit them to speakers 840a and 840b, respectively. Based on the signals thus transmitted, speakers 840a and 840b output sounds.

Antenna 860 transmits and receives radio signals to and from remote control 30. More specifically, when remote control 30 functions as a receiver of the IP telephone, remote control 30 emits a radio signal corresponding to a sound uttered by the user thereof. This radio signal follows, e.g., a communication format used by an existing cordless telephone.

Radio communication circuit 862 converts the signal provided from antenna 860 into digital data, and sends it to CPU 810. Thereby, voice generation from remote control 30 can be realized.

Radio communication circuit 862 converts the data provided from CPU 810 into an analog signal. This data corresponds to the voice of the IP telephone received by television set 10. This voice is uttered by the user of television set 20. Antenna 860 emits this signal as a radio signal. When remote control 30 is in a range which allows reception of a radio wave emitted from television set 10, the IP telephone is achieved in the above manner.

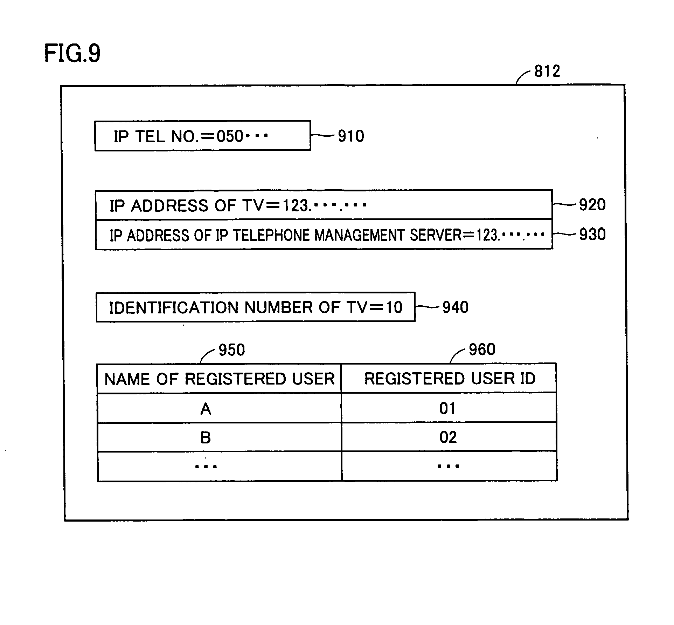

Referring to Fig. 9, a data structure of television set 10 will now be described. Fig. 9 conceptually illustrates a form of data storage in memory 812. Memory 812 includes a plurality of areas for storing data. The number for the IP telephone is stored in an area 910. The IP address of television set 10 is stored in an area 920. The IP address of IP telephone management server 50 is stored in an area 930. The identification number "10" of television set 10 is stored in an area 940. The name of the user which is registered in advance as the user of television set 10 is stored in an area 950. The ID of the user thus registered is stored in an area 960. This ID is used in processing by CPU 810.

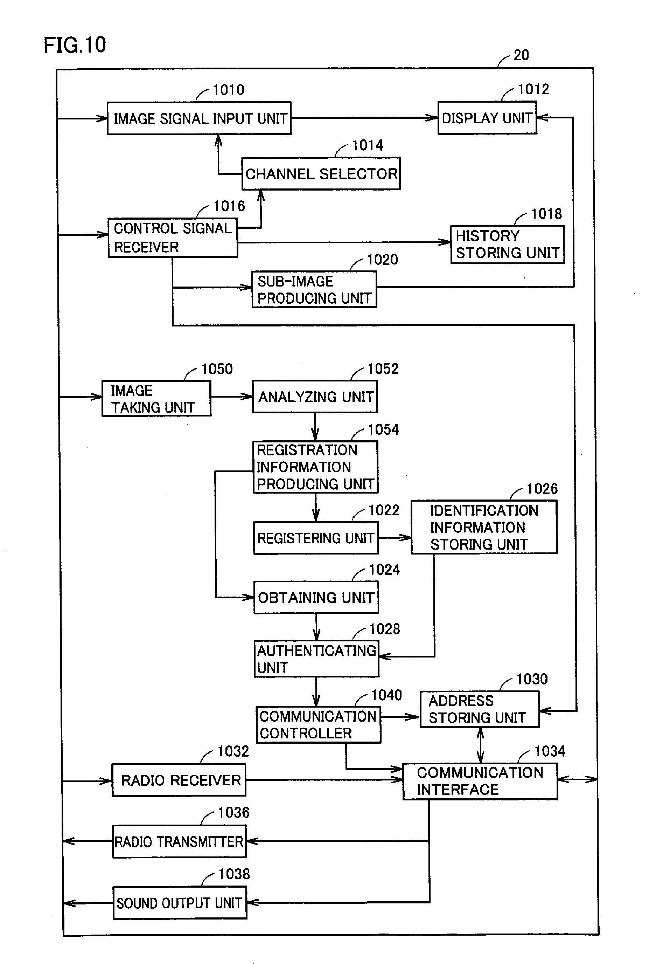

Referring to Fig. 10, a structure of television set 20 will now be described. Fig. 10 is a block diagram illustrating various functions performed by television set 20. Similarly to television set 10, television set 20 includes an image signal input unit 1010, a display 1012, a channel selector 1014, a control signal receiver 1016, a history storing unit 1018, a sub-image producing unit 1020, a registering unit 1022, an obtaining unit 1024, a viewer information storing unit 1026, an authenticating unit 1028, an address storing unit 1030, a radio receiver 1032, a communication interface 1034, a radio transmitter 1036, a sound output unit 1038 and a communication controller 1040.

Television set 20 further includes an image taking unit 1050, an analyzing unit 1052 and a registration information producing unit 1054.

Television set 20 shown in Fig. 10 differs from television set 10 in Fig. 7 in that television set 20 has an image taking function and a function of obtaining the taken image. Accordingly, the difference will now be described.

First, image taking unit 1050 takes an image of a subject that is present in a predetermined shooting range with respect to television set 20, and outputs an image signal. Image taking unit 1050 is implemented in the form of a camera having a CCD (Charge Coupled Device) element, a CMOS (Complementary Metal-Oxide Semiconductor) element or the like. The image signal is provided to analyzing unit 1052.

Analyzing unit 1052 executes the analyzing processing based on the provided image signal. A result of the analyzing processing is provided to registration information producing unit 1054.

Registration information producing unit 1054 calculates information for registering the user of television set 20 such as characteristic amounts of the user's face. The characteristic amounts are a distance between eyes, a distance between the eye and a nose, and the like. The produced information is sent to registering unit 1022. Registering unit 1022 writes the information in viewer information storing unit 1026.

Based on the output of registration information producing unit 1054, obtaining unit 1024 obtains the information about the user which is actually watching television set 20. Obtaining unit 1024 sends the obtained information to authenticating unit 1028.

Authenticating unit 1028 determines whether the user of television set 20 is the registered user or not. More specifically, authenticating unit 1028 compares the information stored in viewer information storing unit 1026 with the information obtained by obtaining unit 1024 for authenticating the user. A result of the authentication is set to communication controller 1040.

Based on this authentication result, communication controller 1040 controls the communications via communication interface 1034. For example, when the authentication result indicates that the user is the preregistered user, communication controller 1040 performs the communications with another television set (e.g., television set 10) using the address stored in address storing unit 1030. Conversely, when the user is not registered, communication controller 1040 inhibits the communications by the user.

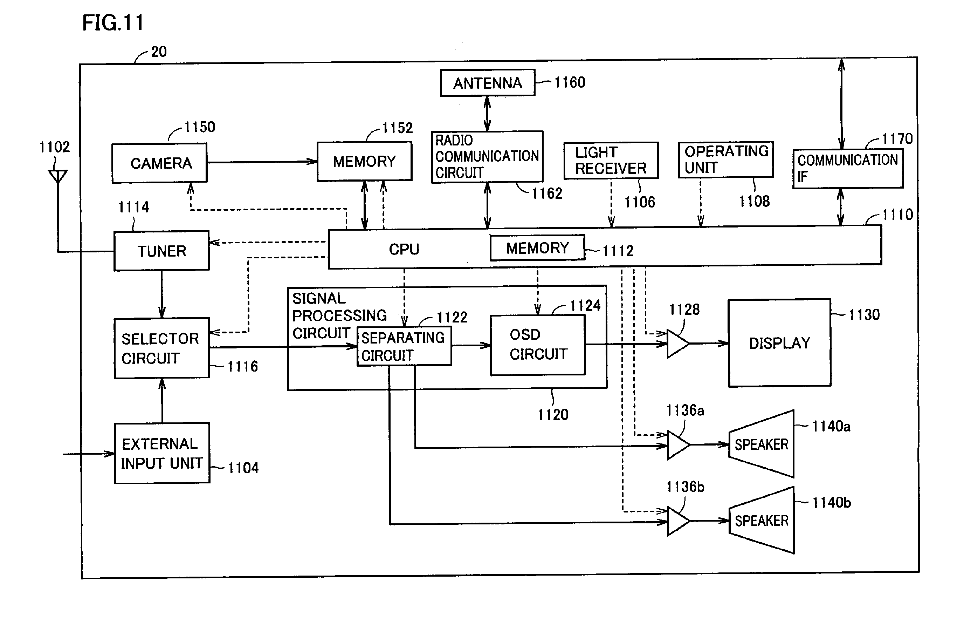

Referring to Fig. 11, a specific structure of television set 20 will now be described. Fig. 11 is a block diagram showing a hardware structure of television set 20. Television set 20 includes an external input unit 1104, a light receiver 1106, an operating unit 1108, a CPU 1110, a tuner 1114, a selector circuit 1116, a signal processing circuit 1120, a display driver 1128, a display 1130, amplifiers 1136a and 1136b, speakers 1140a and 1140b, a camera 1150, a memory 1152, an antenna 1160 and a radio communication circuit 1162.

CPU 1110 includes a memory 1112. Signal processing circuit 1120 includes a separating circuit 1122 and an OSD circuit 1124. Tuner 1114 accepts input of the signal received by an antenna 1102.

Television set 20 shown in Fig. 11 differs in hardware structure from television set 10 shown in Fig. 8 in that television set 20 has camera 1150 and memory 1152. Other structures are the same. Accordingly, only different structures will be described below.

Camera 1150 functions as image taking unit 1050. Camera 1150 is arranged on a front side of a casing of television set 20 and, e.g., above a display region. Camera 1150 executes the image taking operation based on the instruction provided from CPU 1110 to produce the digital image data and send it to memory 1152.

Memory 1152 is, e.g., a volatile memory such as a RAM. For the image processing by CPU 1110, it is preferable that memory 1152 can perform fast data reading and writing. Memory 1152 stores the image data in its work area.

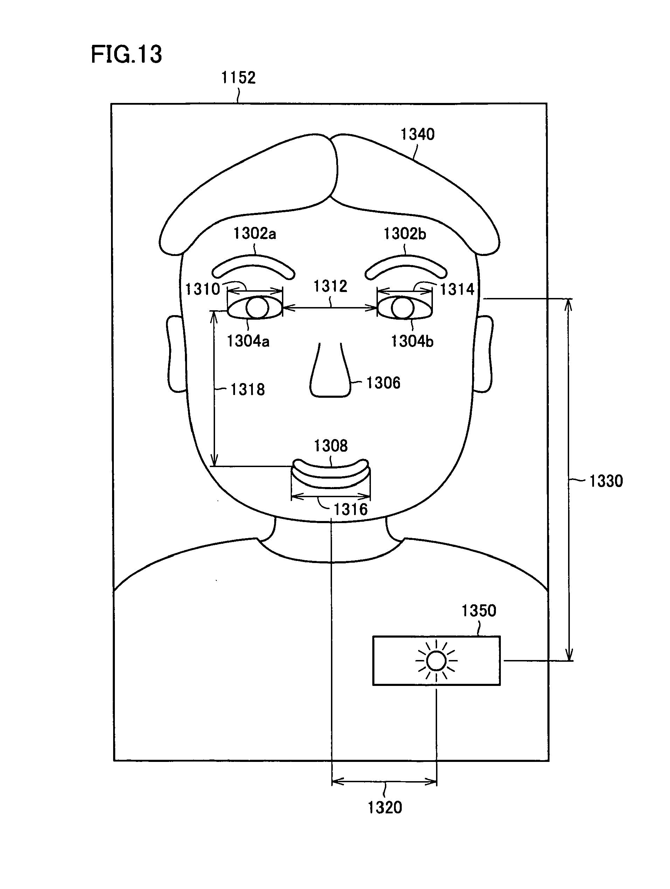

CPU 1110 executes known analyzing processing using the image data, and calculates the characteristic amounts (Fig. 13) of the person who is shot as the viewer of television set 20. Details of the analyzing processing are readily understood by those skilled in the art. Therefore, description thereof is not repeated.

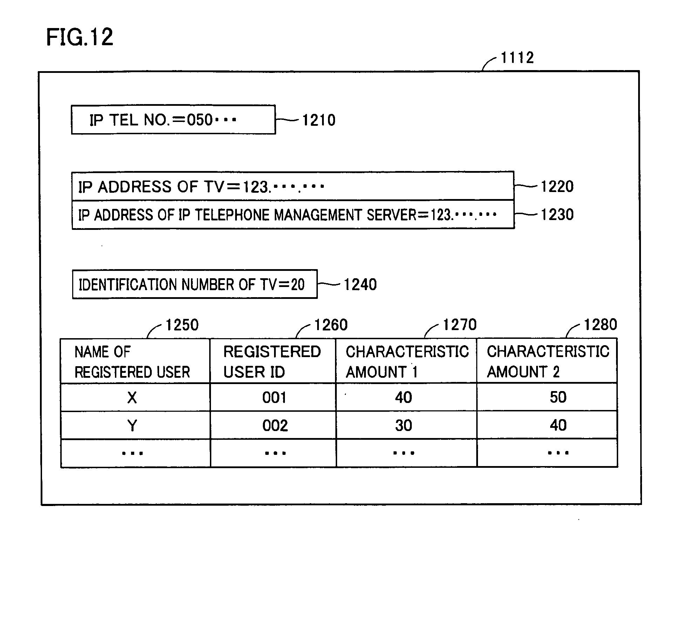

Referring to Fig. 12, the data structure of television set 20 will now be described. Fig. 12 conceptually illustrates a form of data storage in memory 1112.

An area 1210 stores the number for the IP telephone assigned to television set 20. An area 1220 stores the IP address of television set 20. An area 1230 stores the IP address of IP telephone management server 50. An area 1240 stores the identification number of television set 20.

An area 1250 stores the name of the user registered as the user of television set 20. An area 1260 stores the ID of the user. Areas 1270 and 1280 store the characteristic amounts of the user. In the example illustrated in Fig. 12, two kinds of the characteristic amounts are used for specifying the user. However, only one kind of the characteristic amounts may be used, or three or more kinds of the characteristic amounts may be used.

Referring to Fig. 13, description will now be given on processing of extracting face image data, which is performed for achieving the television according to the embodiment of the invention. Fig. 13 conceptually illustrates the face image data stored in memory 1152.

When a subject is positioned in front of display 1130 of television set 20 and the image taking processing is normally executed, the data produced by the image taking processing is stored in memory 1152. The face of the subject includes portions of a skin color and portions of other colors. For example, hair, eyebrows and pupils are black in many cases. When binarizing processing or gradation processing is effected on the image data of the subject image, an image having different gray-scale levels is produced.

As shown in Fig. 13, eyebrows 1302a and 1302b, pupils 1304a and 1304b, and a mouth 1308 are recognized. When a scale in the area of memory 1152 is specified in advance, calculation is performed to obtain a distance 1312 between the eyes, lengths 1310 and 1314 of the eyes, a width 1316 of the mouth and a distance 1318 between a tail of the eye and a center of the mouth.

In this case, memory 1152 stores, e.g., a value of distance 1312 and a value of distance 1318 as information in the lateral direction and information in the vertical direction, respectively. Thereby, the position of the subject corresponding to the image produced by the shooting with camera 1150 can be easily determined. Each distance can be represented by the number of pixels forming the image data. More specifically, the number of pixels between the characteristic points of the face can be used as the above "distance". The characteristic points of the face are not restricted to the above, and the eyes, nose, mouth and others that are usually used in the face recognizing technology can be used in this embodiment.

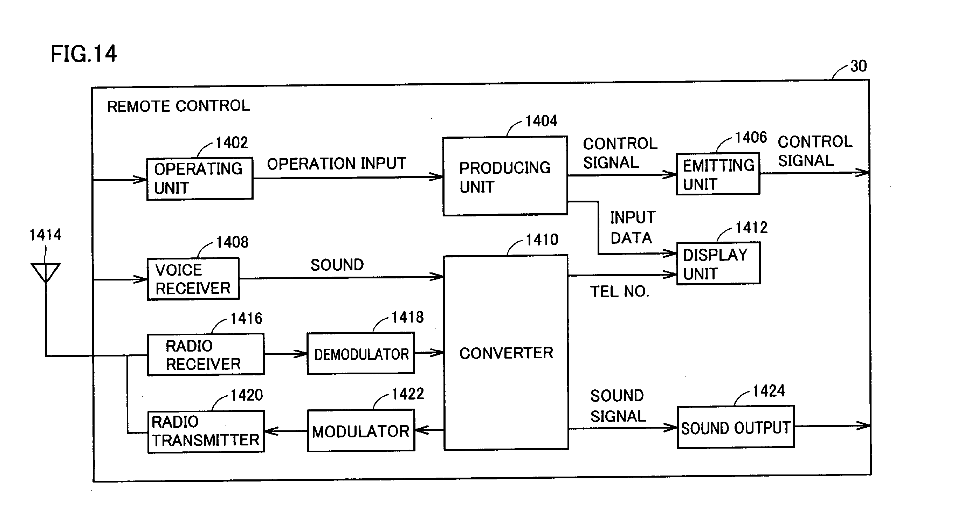

Referring to Fig. 14, description will now be given on the structure of remote control 30 according to the embodiment. Fig. 14 is a block diagram illustrating configurations of functions performed by remote control 30. Remote control 30 has a function of controlling the device and an IP telephone function.

Remote control 30 includes an operating unit 1402, a producing unit 1404, an emitting unit 1406, a voice receiver 1408, a converter 1410, a display 1412, an antenna 1414, a radio receiver 1416, a demodulator 1418, a radio transmitter 1420, a modulator 1422 and a sound output unit 1424.

Operating unit 1402 accepts the input of operation instructions to remote control 30. Operating unit 1402 sends the signal corresponding to the operation to producing unit 1404.

Producing unit 1404 produces the control signal for controlling the operation of television set 10 based on the signal provided from operating unit 1402, and sends the signal thus produced to emitting unit 1406.

Emitting unit 1406 emits the control signal. For example, emitting unit 1406 emits an infrared control signal.

Voice receiver 1408 accepts the voice uttered by the user of remote control 30. Voice receiver 1408 sends the sound signal to converter 1410.

Converter 1410 processes the sound signal provided from voice receiver 1408, and converts it into a signal format for radio transmission.

Display unit 1412 displays an image corresponding to the signal provided from producing unit 1404 or an image corresponding to the data provided from converter 1410. The displayed image includes a channel number for selection in television set 20, a telephone number entered for IP telephone calling and the number of an incoming call.

Antenna 1414 receives the signal for the IP telephone transmitted from television set 20. Radio receiver 1416 accepts the input of the signal received by antenna 1414. Radio receiver 1416 sends the received signal to demodulator 1418.

Demodulator 1418 demodulates the signal, and sends the demodulated signal to converter 1410. Modulator 1422 modulates the signal provided from converter 1410 to produce the signal for radio transmission, and sends the produced signal to radio transmitter 1420.

Radio transmitter 1420 sends the signal to antenna 1414.

When the user of remote control 30 speaks to voice receiver 1408, the voice is converted into a signal, which is emitted from antenna 1414. Antenna 1160 of television set 20 receives the emitted signal.

In another aspect, when remote control 30 receives via antenna 1414 the signal for the IP telephone emitted from television set 20, converter 1410 obtains the telephone number of the caller included in the received signal, and sends the number to display 1412, which displays the telephone number of the other party.

Converter 1410 takes out the sound signal from the signal demodulated by demodulator 1418, and sends it to sound output unit 1424. Sound output unit 1424 outputs the sound based on the received signal. For example, when remote control 30 receives calling from the IP telephone, sound output unit 1424 outputs a ringing sound thereof and a voice of the caller.

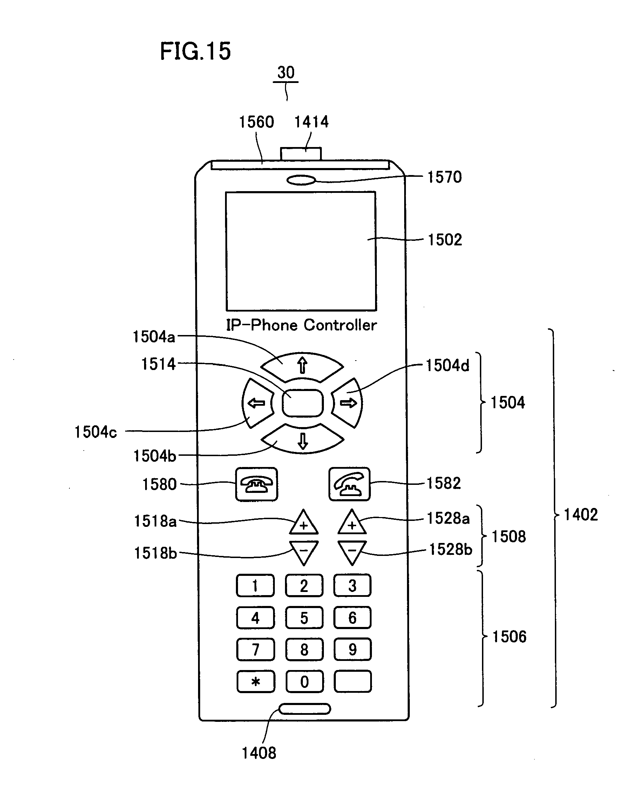

Fig. 15 shows an outer appearance of remote control 30. Remote control 30 includes antenna 1414, operating unit 1402, a light emitting unit 1560 configured to emit light of a control signal to a control target, and a display 1520.

Operating unit 1402 is specifically realized by buttons, a touch panel, a dial or the like. Operating unit 1402 includes cursor buttons 1504a, 1504b, 1504c and 1504d for defining longitudinal and lateral directions of the cursor movement displayed on display 1520, an entry button 1514 for accepting input of an instruction by which the user of the remote control 30 confirms the details of the input, up-down buttons 1508 for raising/lowering a value of the output control signal and numeric buttons 1506. Up-down buttons 1508 include a first up-button 1518a, a first down-button 1518b, a second up-button 1528a and a second down-button 1528b.

Remote control 30 further includes a button 1582 configured to accept an instruction of calling or receiving of the IP telephone, and a button 1580 configured to accept an instruction of ending the IP telephone.

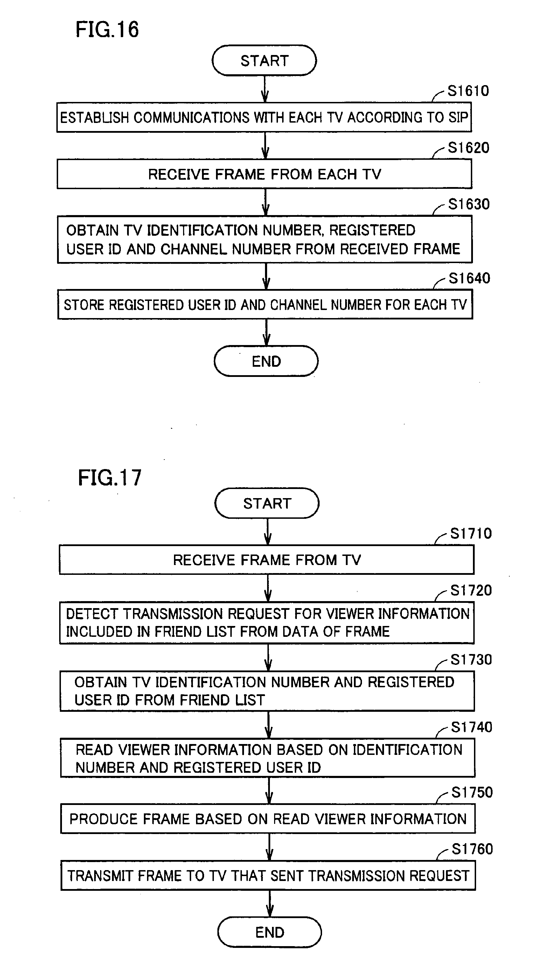

Referring to Fig. 16, description will now be given on a control structure of IP telephone management server 50. Fig. 16 is a flowchart illustrating a part of processing executed by CPU 510 of computer system 500 functioning as the server.

In step S1610, CPU 510 establishes the communications with television sets 10 and 20 according to the session initiation protocol.

In step S1620, CPU 510 receives frames having the viewer information from television sets 10 and 20.

In step S1630, CPU 510 obtains the identification numbers of the television sets, registered user IDs and the channel numbers from the received frames. In step S 1640, CPU 510 stores the registered user ID and the channel number for each television set in the areas reserved in hard disk 550 (i.e., areas 660 and 670). Thereby, IP telephone management server 50 stores the viewer information about each television set.

Referring to Fig. 17, description will now be given on the distribution of the viewer information. Fig. 17 is a flowchart illustrating partially a series of processing executed for distributing the information to each television set from IP telephone management server 50.

In step S 1710, CPU 510 detects the reception of the frame from television set 10. In step S1720, CPU 510 detects a transmission request for the viewer information included in the friend list from the data of the detected frame. In step S 1730, CPU 510 obtains the identification number of the television set and the registered user ID from the friend list.

In step S 1740, CPU 510 reads the viewer information based on the identification number and the registered user ID. In step S1750, CPU 510 produces frame 300. based on the viewer information thus read. In step S 1760, CPU 510 transmits frame 300 to television set 10 that transmitted the transmission request. In this manner, each television set can obtain the information about the viewers of the other television sets.

Instead of the form in which the data is read in response to the request issued from any user, such a form may be employed that the data is read in response to the request(s) issued from only specific user(s). In this case, the viewer information is transmitted, e.g., between the parties that have accepted the information transmission between them.

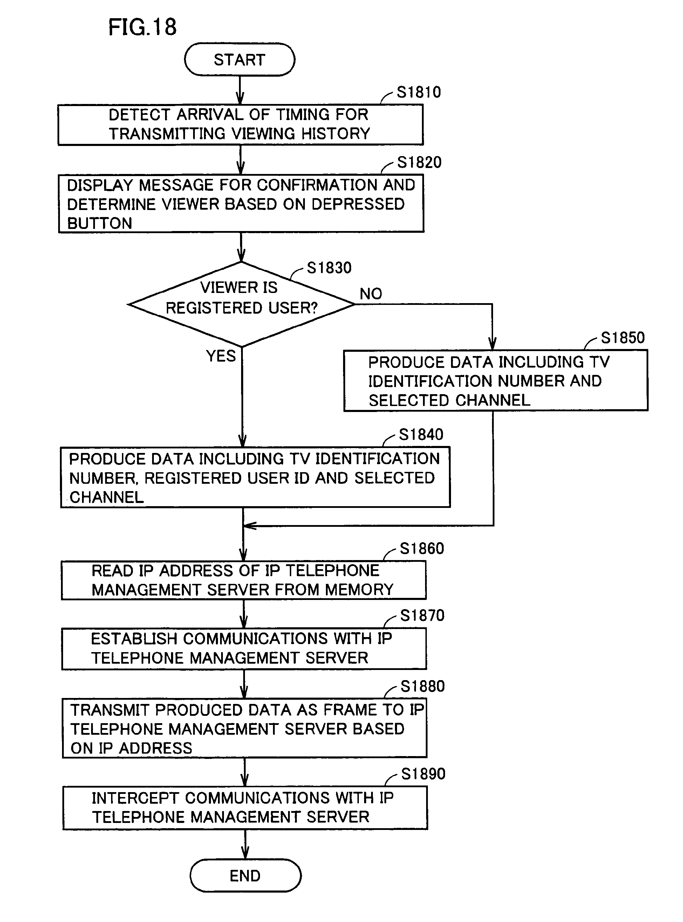

Referring to Fig. 18, description will now be given on a control structure of television set 10. Fig. 18 is a flowchart partially illustrating a series of operations executed by CPU 810 of television set 10.

In step S 1810, CPU 810 detects the arrival of timing for transmitting the history of viewing. In step S 1820, CPU 810 produces a message for confirming the transmission of the history of viewing, and displays the message on display 830 so that the viewer of television set 10 can be confirmed based on the operation performed on remote control 30.

In step S 1830, CPU 810 determines whether the viewer is the registered user or not. When CPU 810 determines that the viewer is the registered user (YES in step S1830), the control proceeds to step S1840. Otherwise (NO in step S1830), CPU 810 performs control processing in step S1850.

In step S1840, CPU 810 produces data including the television identification number, the registered user ID and the selected channel. In step S1850, CPU 810 produces data including the television identification number and the selected channel. In this case, the viewer is not registered so that data (e.g., "NULL") representing it is assigned.

In step S 1860, CPU 810 reads the IP address of IP telephone management server 50 from memory 812. In step S1870, CPU 810 establishes the communications with IP telephone management server 50 through communication interface 870. In step S 1880, CPU 810 transmits the produced data, as the frame, to IP telephone management server 50 based on the read IP address. In step S1890, CPU 810 intercepts the communications with IP telephone management server 50.

In this manner, the viewer information is transmitted from television set 10 to IP telephone management server 50. It is not essential that the communications with IP telephone management server 50 are established after step S 1860. For example, the communications may be established before step S 1860.

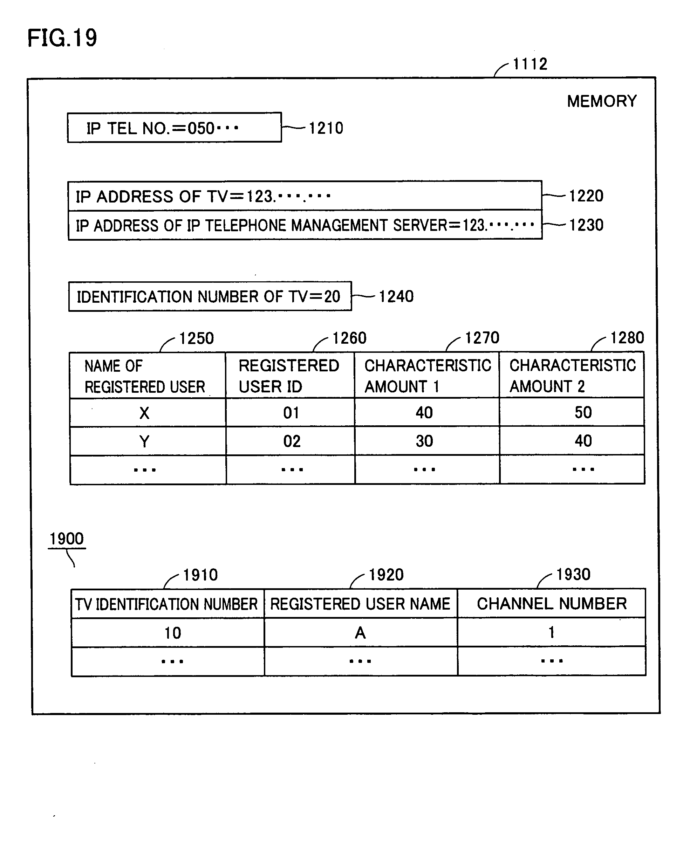

Referring to Fig. 19, the data structure of television set 10 will be further described. Fig. 19 illustrates a form of data storage in memory 1112 after obtaining of the friend list.

More specifically, memory 1112 further stores a friend list 1900. Friend list 1900 includes an identification number 1910 of the television, a registered user name 1920 and a channel number 1930. Friend list 1900 is obtained by the communications between television set 10 and IP telephone management server 50. This list can be updated successively.

Television set 10 can perform communications with IP telephone management server 50 according to friend list 1900. Therefore, television set 10 can perform the communications with the specific viewers, and more specifically with the television set(s) used by the specific viewer(s).

In image display system 1 according to the embodiment, as described above, the specific television sets forming image display system 1 share the information. The shared information includes the channel information about channels selected in the respective television sets. Consequently, the various television sets sharing the information can select the same channel. Therefore, the viewers of the respective television sets can view the same images in different positions, and this can raise the viewer's interest.

When one television set has two or more tuners, it can selects different channels. Therefore, this television set can display a plurality of images, and therefore can display an image on the channel selected by another television set. Thereby, in addition to the image that has been originally viewed by the viewer of this television set, this viewer can view an image that is being viewed by a specific person (a user registered in the friend list). This can likewise raise the interest.

### <Second Embodiment>

A second embodiment of the invention will now be described. The image display system according to the embodiment differs from the foregoing embodiment in that a television set displays an image on a channel that is the same as that selected in another television set. The respective devices, i.e., the IP telephone management server and the television sets forming the image display system according to this embodiment have the same hardware structure as those already described, and therefore description thereof is not repeated.

The television set according to this embodiment is achieved by changing processing that is executed by the CPU employed in the television set.

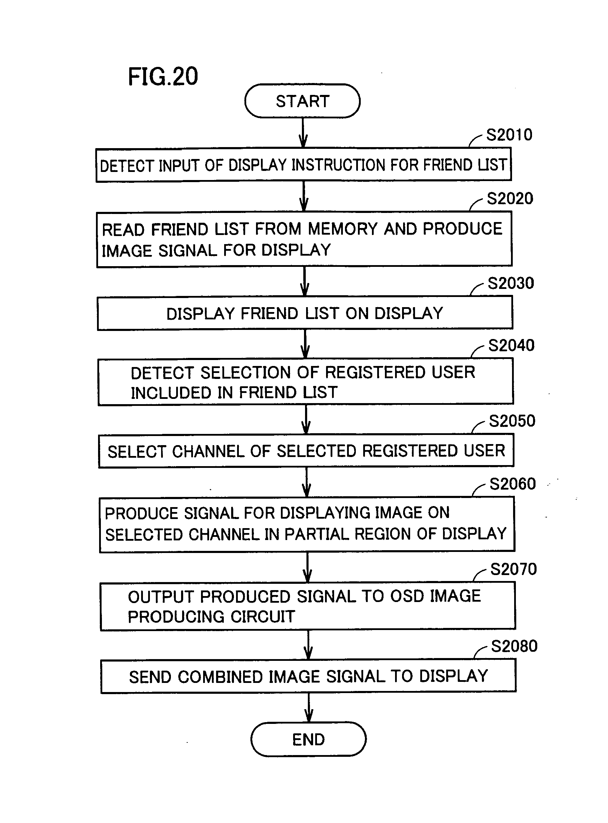

Referring to Fig. 20, the control structure of the television set according to the embodiment will now be described. In the following description, the processing is achieved by the television set having the structure shown in Fig. 8. In the following description, however, tuner 814 achieves two tuning functions, and thus can simultaneously select two channels.

In step S2010, CPU 810 employed in the television set according to the embodiment detects the input of an instruction for displaying the friend list, based on the control signal received by light receiver 806.

In step S2020, CPU 810 reads the friend list from memory 812, and produces the image signal for displaying the list. In step S2030, CPU 810 displays the friend list on display 830 based on the image signal thus produced.

In step S2040, CPU 810 detects that the registered user included in the friend list displayed on display 830 is selected based on the signal received by light receiver 806. In step S2050, CPU 810 sends an instruction to tuner 814 to select the channel of the registered user who is selected. In step S2060, CPU 810 produces a signal for displaying the image on a partial region of display 830, based on the image signal provided from the channel selected in step S2050. More specifically, CPU 810 transmits the instruction to signal processing circuit 820. Signal processing circuit 820 thins out the signal provided from selector circuit 816 to produce an image signal corresponding to the above partial region. The sizes of this region may be variable.

In step S2070, CPU 810 sends the instruction to signal processing circuit 820 to provide the image signal produced in step S2060 to OSD circuit 824. OSD circuit 824 combines this image signal with the image signal obtained on the channel that has been selected.

In step S2080, OSD circuit 824 sends the combined image signals to display 830 via display driver 828 based on the instruction provided from CPU 810. Display unit 830 displays the respective images on the two channels based on the provided image signals.

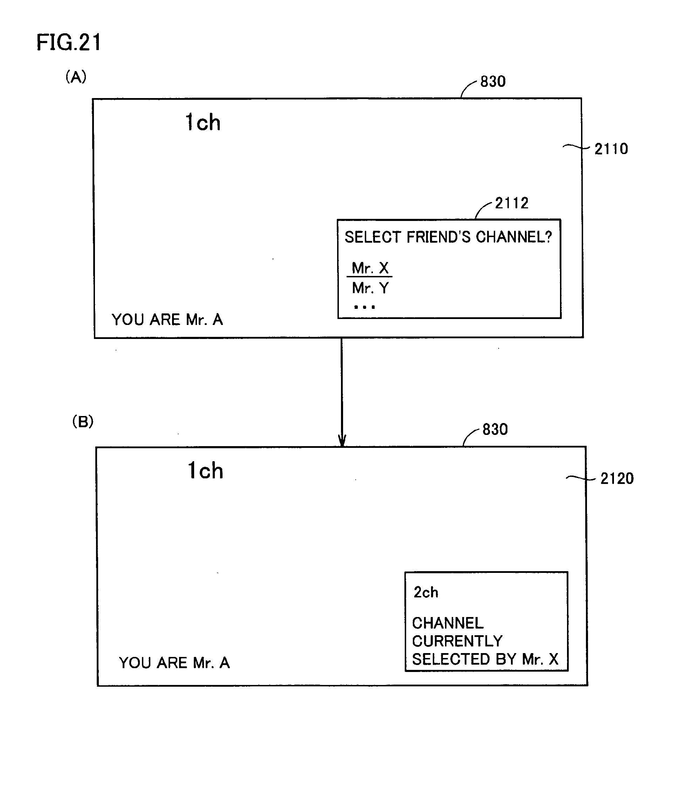

Referring to Fig. 21, description will now be given on the manner of display of the image by television set 10 according to the embodiment. Fig. 21 shows switching on the screen that occurs when the images on the two channels are displayed.

On a screen (A), television set 10 displays the friend list at the lower right position in display region 2110 in response to the user's operation. Display region 2110 displays a message for inquiring whether the user intends to display the image of the channel selected by another viewer included in the list or not.

The user performs the selecting operation through cursor buttons 1504a, 1504b, 1504c and 1504d on remote control 30, and selects the viewer "X" included in the friend list. The user operates the buttons on remote control 30 to provide to television set 10 the instruction for displaying the image on the channel that is being selected by the selected viewer "X". Television set 10 displays on display 830 the image of the channel (channel 2) currently selected by the viewer "X" on a partial region 2120 of display region 2110 (screen (B)). In this manner, the image on the channel selected by specific one of the other parties is displayed.

According to the image display system of the embodiment, as described above, the television set forming the system displays the image on the channel selected by specific one of the other parties in addition to the image on the channel selected by the viewer himself or herself. Thereby, each viewer can view multiple images in real time so that the viewers in the different positions can have common topics, and this can raise the viewer's interest.

### <Third Embodiment>

A third embodiment of the invention will now be described. The image display system according to the embodiment differs from the embodiments already described in that the television set forming the system has a function of telephoning a party included in the friend list. Each of the devices of the image display system according to the third embodiment has the same hardware structures as those of the systems according to the embodiments already described. Therefore, the description of the hardware structure is not repeated.

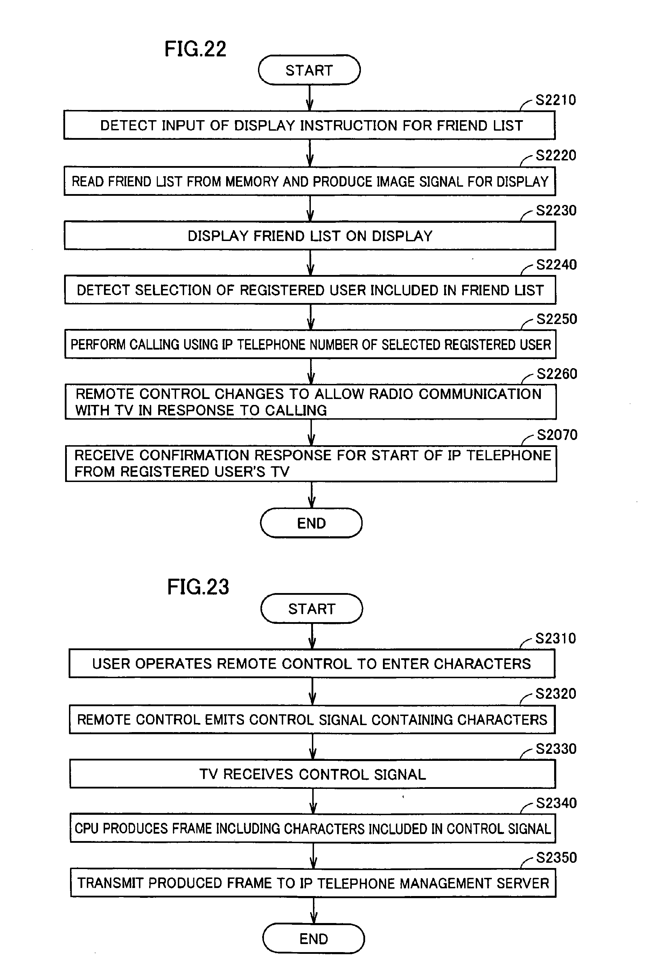

Referring to Fig. 22, description will now be given on the control structure of television set 10 according to this embodiment. Fig. 22 is a flowchart illustrating partially a series of operations executed by television set 10.

In step S2210, CPU 810 detects the input of the instruction to display the friend list stored in memory 812, based on the control signal received by light receiver 806.

In step S2220, CPU 810 reads the friend list from memory 812, and produces the image signal for displaying the list. CPU 810 sends the image signal to OSD circuit 824.

In step S2230, display 830 displays the friend list on the display region, based on the image signal provided from OSD image circuit 824. Displayed items include the names, IP telephone numbers and television viewing situations and others of the registered users. For example, television set 10 displays the friend list in the bottom row of display 830 or at one of the corners. Any position not disturbing the image display by the friend list can be selected.

In step S2240, CPU 810 detects, based on the control signal received by light receiver 806, that a registered user included in the friend list displayed on display 830 is selected. CPU 810 temporarily writes the ID of the registered user thus selected in a work area of memory 812. Further, CPU 810 refers to the friend list in memory 812, and reads the IP telephone number of the selected user into the work area of memory 812.

In step S2250, the calling processing is performed, using the IP telephone number of the selected user. Communication interface 870 performs communications with IP telephone management server 50 over the Internet 70 to start the IP telephone session. IP telephone management server 50 responds to the calling from television set 10, and thereby requests the initiation of the session for performing the IP telephone communications with the user (e.g., television set 20) included in the friend list. More specifically, IP telephone management server 50 performs the calling to television set 20.

When the user of television set 20 performs, in response to the request, the operation to start the IP telephone session (e.g., by operating a speech communication button on remote control 40, and more specifically, by depressing a button on remote control 40 corresponding to button 1582 on remote control 30), the session starts between IP telephone management server 50 and television set 20.

In step S2260, remote control 30 of television set 10 changes to the state in which radio communications with television set 10 can be performed, in response to the calling by television set 10.

In step S2270, CPU 810 detects reception of acknowledgement ACK about start of the IP telephone via communication interface 870 from television set 20 of the registered user. Thereafter, television sets 10 and 20 enter the state in which speech communications can be performed by the IP telephone via IP telephone management server 50.

According to the image display system of this embodiment, as described above, each viewer can perform the communications with another viewer by the IP telephone even during viewing of the image. Therefore, the viewers can view the same image in the shared fashion, and further can give expressions and the like to each other so that the interest is further raised.

### <Fourth Embodiment>

A fourth embodiment of the invention will now be described. The television set according to this embodiment differs from the television sets according to the embodiments already described in that the television set has a function of transmitting character information. The television set according to this embodiment is achieved by the same hardware structures as the television sets according to the embodiments already described. Therefore, the description thereof is not repeated.

Fig. 23 is a flowchart illustrating a part of a series of operations executed by television set 10 according to the embodiment.

In step S2310, remote control 30 for controlling television set 10 detects entry of characters by the user. The entry of characters into remote control 30 is achieved, e.g., similarly to entry of characters into a cellular phone. More specifically, numeric buttons 1506 are selectively depressed to enter characters in hiragana or katakana. When the user depresses entry button 1514, conversion processing is performed on entered katakanas or hiraganas, and kana-to-kanji conversion is performed.

In step S2320, remote control 30 emits a control signal including the characters entered in step S2310 in response to the input of the transmission instruction by the user. Remote control 30 emits the signal, e.g., in a form of an infrared signal.

In step S2330, television set 10 receives the emitted control signal via light receiver 806. The received control signal is sent to CPU 810. In step S2340, CPU 810 produces the frame including the characters included in the control signal. In step S2350, CPU 810 transmits the produced frame to IP telephone management server 50 via communication interface 870.

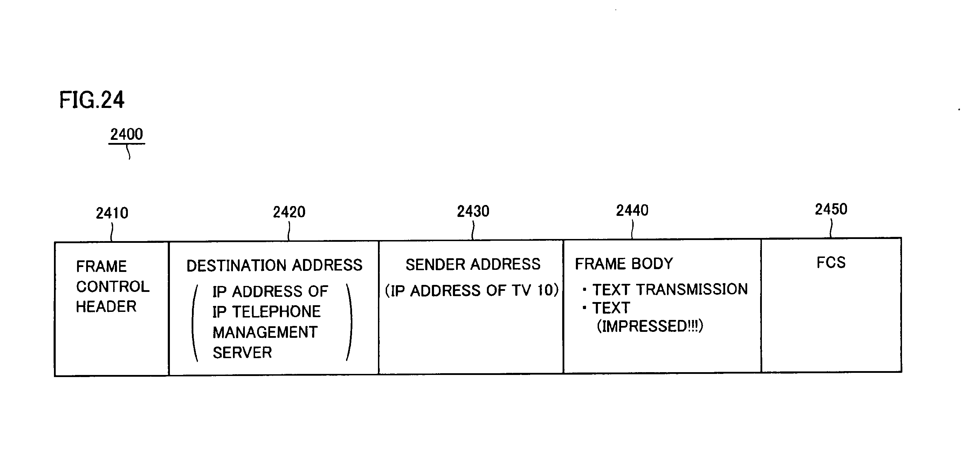

Referring to Fig. 24, description will now be given on the communications between television set 10 and IP telephone management server 50. Fig. 24 illustrates a structure of a frame 2400 including the characters entered by the user. Frame 2400 includes a frame control header 2410, a destination address 2420, a sender address 2430, a frame body 2440 and an FCS 2450. Destination address 2420 is an IP address of IP telephone management server 50. Sender address 2430 is the IP address of television set 10. Frame body 2440 includes a control code representing the fact that frame 2400 is employed for transmitting text, and also includes specific text (characters entered in step S2310). Frame 2400 illustrated in Fig. 24 has characters "Impressed!!!".

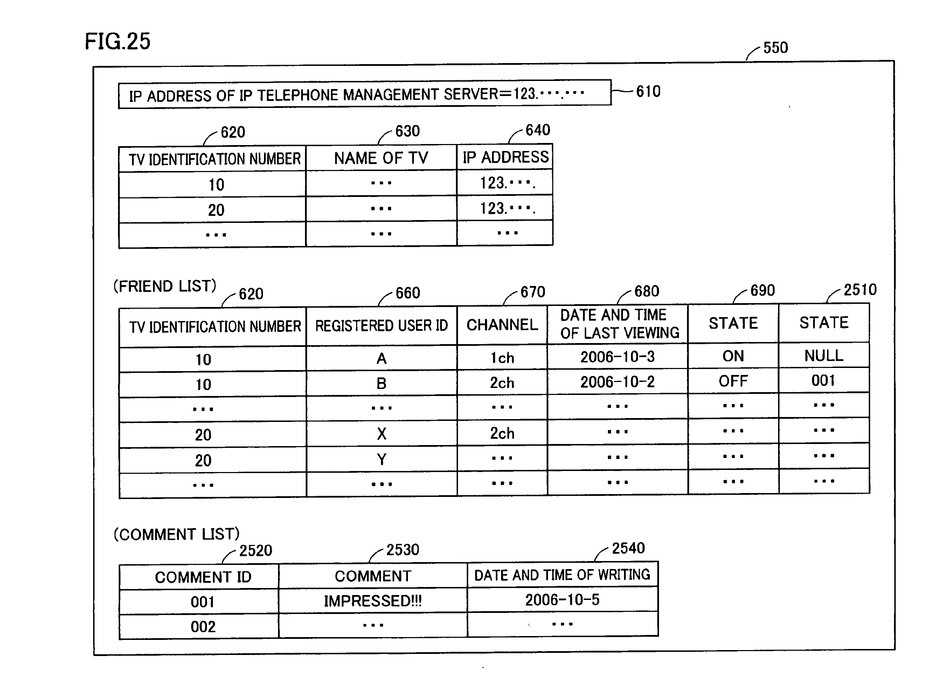

Referring to Fig. 25, description will now be given on the data structure of IP telephone management server 50 according to the embodiment. Fig. 25 illustrates a form of data storage in hard disk 550 employed in computer system 500 functioning as the server. In addition to the data stored in areas 610 - 690, hard disk 550 stores data for managing comments transmitted from television set 10 and other television sets as well as data representing the comments.

More specifically, an area 2510 stores IDs of comments transmitted from the respective television sets. In the example illustrated in Fig. 25, the user of television set 10 having the registered user ID of "B" has transmitted a comment, of which ID is "001". The user having the registered user ID of "A" has not transmitted a comment. In this case, area 2510 stores "NULL".

More specifically, areas 2520 - 2540 store the data relating to the transmitted comment. Area 2520 stores the ID of the comment. This ID is the same as that stored in area 2510. Area 2530 stores details of the comment. In the example illustrated in Fig. 25, area 2530 stores the comment "Impressed!!!" transmitted by frame 2400. Area 2540 stores date and time of writing, i.e., the date and time when IP telephone management server 50 received this comment.

As illustrated in Fig. 25, since the comments transmitted for each television set are divided depending on the registered user IDs, CPU 510 can take out the comments transmitted from a specific user.

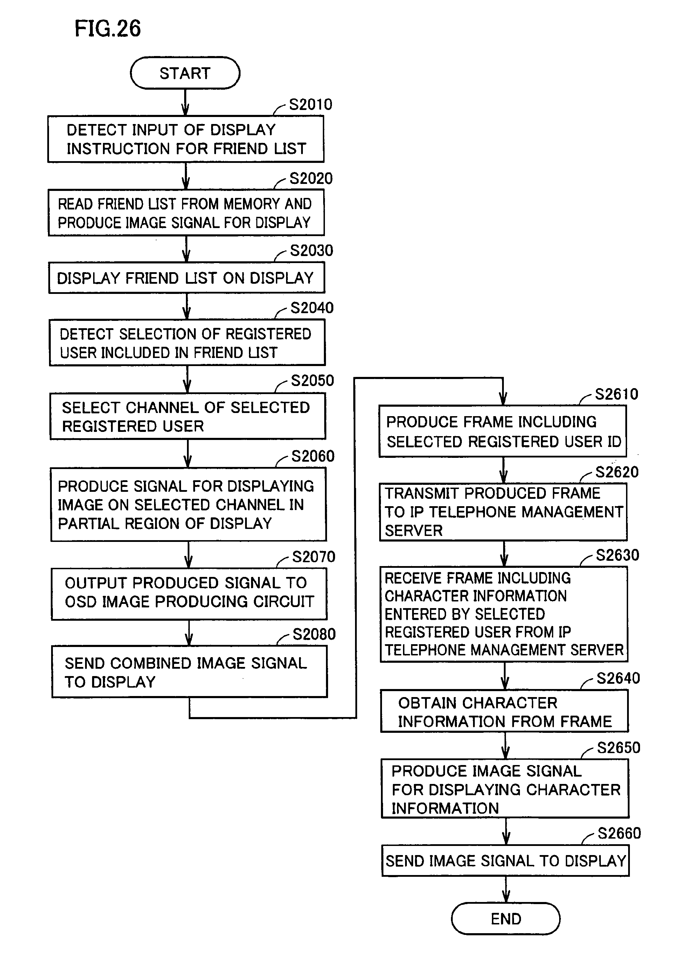

Referring to Fig. 26, description will now be given on the control structure for the television set that can display the comment. Fig. 26 is a flowchart illustrating a series of operations executed by the television set that receives the comment from IP telephone management server 50. The same steps as those in the foregoing processing bear the same step numbers. Therefore, the description thereof is not repeated.

In step S2610, CPU 1110 of television set 20 produces a frame including the ID of the registered user displayed on display 1130, based on the control signal received by a light receiver 1106.

In step S2620, CPU 1110 transmits the produced frame to IP telephone management server 50. IP telephone management server 50 receiving the frame reads the comment stored in hard disk 550, and produces a frame including the comment. When IP telephone management server 50 transmits this frame, television set 20 receives it via a communication interface 1170.

In step S2630, CPU 1110 detects that television set 20 has received the frame including the character information (comment) entered by the selected registered user from IP telephone management server 50. In step S2640, CPU 1110 obtains the character information from the frame, and writes it in memory 1112. In step S2650, CPU 1110 produces the image signal for displaying the character information. CPU 1110 sends the image signal thus produced to display 1130 via display driver 1128. Display unit 1130 displays the character information based on the image signal.

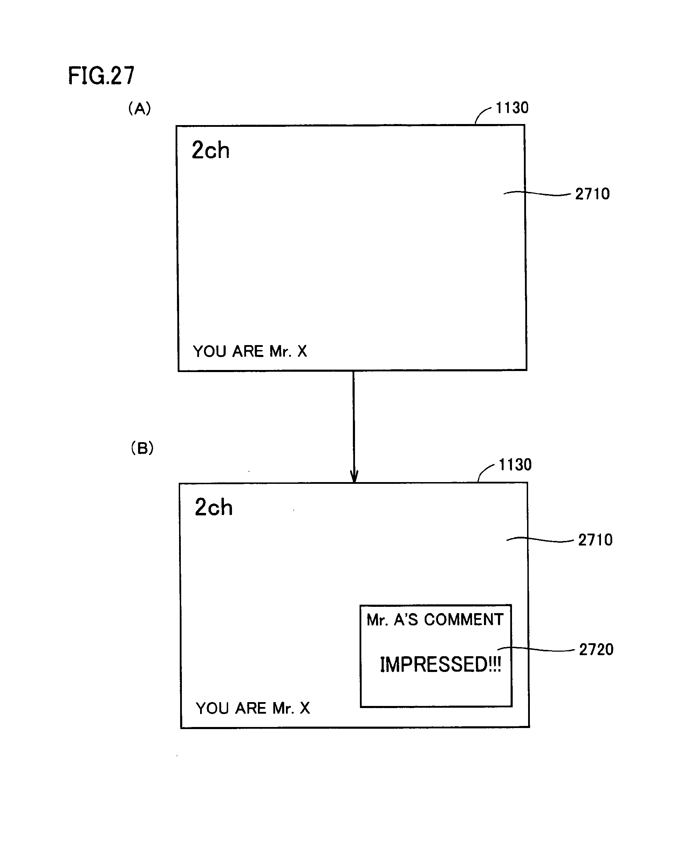

Referring to Fig. 27, description will now be given on the form of display on the screen of television set 20 according to the embodiment. Fig. 27 shows switching of display on display 1130 of television set 20.

As can be seen on screen (A), display 1130 displays the channel (i.e., channel "2") selected by the user of television set 20 in display region 2710. Thereafter, the user (named "X") operates remote control 40 to perform the communications with IP telephone management server 50, and intends to obtain the comment of another user (i.e., user "A" included in the friend list) so that IP telephone management server 50 transmits the intended comment to television set 20. When television set 20 receives the frame, it displays a message representing the received comment in a display region 2720 (screen (B)).

According to the image display system of this embodiment, as described above, each television set forming the system can transmit and receive the character information similarly to the so-called cellular phone in accordance with the operation performed on the remote control. Therefore, the information of sound can be shared through sounds and further can be shared through characters. Since the character information has been stored, e.g., in IP telephone management server 50, it can be continuously held as the information relating to the history of programs. Therefore, the operator or manager of IP telephone management server 50 can appropriately and precisely obtain the likes and feelings of the viewers.

Although the present invention has been described and illustrated in detail, it is clearly understood that the same is by way of illustration and example only and is not to be taken by way of limitation, the scope of the present invention being interpreted by the terms of the appended claims.

## Claims

1. The image display system (1) comprising a first television receiver (10), a second television receiver (20), and a communication control device (50) connected to said first and second television receivers via a communication line, wherein
said first television receiver (10) includes:
a communication unit (870) configured to perform transmission or reception of a signal to or from said communication control device according to a predefined communications protocol,
a display unit (830) configured to display an image,
a storing unit (852) configured to store first device information identifying said first television receiver and a registry information identifying a user of said first television receiver,
an input unit (806, 808) configured to accept input of an operation instruction, and
a transmission controller (810) configured to control said communication unit to transmit said first device information, said registry information and channel information specifying a channel selected for displaying an image on said display unit to said communication control device;
said communication control device (50) includes:
a communication unit (410, 420) configured to transmit or receive a signal to or from said first or second television receiver according to said predefined communications protocol,
a first obtaining unit (440) configured to obtain said first device information, said registry information and said channel information from the signal received from said first television receiver, and
a storing unit (450) configured to store said first device information, said registry information and said channel information in a correlated fashion;
said second television receiver (20) includes:
a communication unit (1170) configured to transmit or receive a signal to or from said communication control device according to said predefined communications protocol,
a storing unit (1112) configured to store said first device information identifying said first television receiver, second device information identifying said second television receiver and position data for specifying a position of said second television receiver on said communication line,
an input unit (1106) configured to accept input of an obtaining instruction for information representing a display status of an image of said first television receiver,
a producing unit (1110) configured to produce a transmission request for the information representing said display status in response to the input of said obtaining instruction, said transmission request including said first device information, and
a transmission controller (S1880) configured to control said communication unit to transmit said position data and said transmission request to said communication control device according to said communications protocol;
said communication control device (50) further includes:
a second obtaining unit configured to obtain said transmission request and said position data from the signal received by said second television receiver,
a reading unit configured to read said registry information and said channel information from said storing unit based on said first device information included in said obtained transmission request, and
a transmission controller (470) configured to control said communication unit to transmit said registry information and said channel information to said second television receiver based on said position data; and
said second television receiver further includes:
an obtaining unit (1024) configured to obtain said registry information and said channel information from the signal transmitted from said communication control device, and
a display unit (1012) configured to display said registry information and a channel selected in said first television receiver.

2. The system according to claim 1, wherein
said predefined communications protocol includes an Internet protocol.

3. The system according to claim 2, wherein
said position data includes an Internet protocol address.

4. The system according to claim 1, wherein
in said first television receiver,
said input unit accepts input of said operation instruction including identification data identifying a user of said first television receiver;
said first television receiver further includes:
an obtaining unit configured to obtain said identification data from the input of said operation instruction, and
a determining unit configured to determine whether the viewer providing said operation instruction is a user registered in said first television receiver or not, based on said registry information stored in said storing unit and said obtained identification data; and
in said first television receiver,
said transmission controller controls said communication unit to transmit said first device information, said registry information corresponding to said registered user and channel information specifying the channel selected for displaying the image on said display unit when said viewer is registered in said first television receiver.

5. The system according to claim 1, wherein
in said second television receiver,
said input unit further accepts input of an instruction for displaying an image on the channel displayed in said display unit, and
said display unit displays the image on said channel in a part of the display region based on said instruction.

6. The system according to claim 1, wherein
in said second television receiver,
said display unit displays an image specifying said first television receiver based on said first device information,
said input unit accepts input of an instruction for performing speech communications with the user of said first television receiver in response to selection of said image, and
said transmission controller controls said communication unit to transmit a request for speech communications with said first television receiver to said communication control device in response to input of said instruction.

7. The system according to claim 1, wherein
in said second television receiver,
said storing unit further stores position data for specifying a position of said first television receiver on said communication line,
said input unit accepts an operation for entering characters and an operation designating said first television receiver as a destination, and
said transmission controller controls said communication unit based on said position data to transmit text data corresponding to said characters to said first television receiver.

8. The system according to claim 7, wherein
in said first television receiver,
said storing unit further stores said text data received from said second television receiver, and said second device information identifying said second television receiver, and
said display unit displays an image representing said second television receiver based on said second device information, and said test data.

9. The system according to claim 1, wherein
in said second television receiver,
said transmission controller controls said communication unit to transmit said second device information and channel information specifying a channel selected for displaying the image on said display unit to said communication controller, and
said storing unit of said communication control device stores said second device information and said channel information in said second television receiver in a correlated fashion;
said communication control device further includes:
a determining unit configured to determine whether said channel information in said first television receiver is the same as said channel information in said second television receiver or not;
when it is determined that said channel information in said first television receiver is the same as that in said second television receiver, said transmission controller in said communication control device controls said communication unit to transmit a result of said determination to said second television receiver; and
in said second television receiver,
said display unit displays an image representing said first television receiver based on the result of said determination.

10. The system according to claim 1, wherein
said storing unit of said first television receiver stores a history of operation states of said first television receiver.

11. The system according to claim 10, wherein
said operation states include either a power-on/off history or a channel selection history of said first television receiver.

12. The system according to claim 1, wherein
the transmission controller of said first television receiver controls said communication unit to transmit a channel selection history of said first television receiver to said communication control device;
said storing unit of said communication control device stores said first device information and said selection history in a related manner; and
in said second television receiver,
said input unit accepts input of an operation specifying the channel, and input of an instruction determining whether the selection of said specified channel is performed in said first television receiver or not,
said producing unit produces, based on said instruction, a request for determining whether said specified channel is selected in said first television receiver or not, and
said transmission controller controls said communication unit to transmit said request for the determination to said communication control device;
said communication control device further includes a determining unit configured to determine, based on said request for the determination, whether said selection history includes said specified channel or not; and
said transmission controller of said communication control device controls said communication unit to transmit a result of the determination by said determining unit to said second television receiver, when said selection history includes said channel.

13. The system according to claim 1, wherein
in said second television receiver,
said input unit accepts input of a condition for selection, and
said producing unit produces a search request for a television receiver having a selection history of a channel satisfying said condition,
said transmission controller controls said communication unit to transmit said search request to said communication control device; and
in said communication control device,
said determining unit determines, in response to said search request, presence or absence of the television receiver having the selection history of the channel satisfying said condition, and
said transmission controller controls said communication unit to transmit a result of the determination about said presence or absence to said second television receiver.

14. The image display system (1) comprising a first television receiver (10), and a second television receiver (20), each of said first and second television receivers being connected to a communication control device via a communication line, and said communication control device performing communications with said first or second television receiver according to a predefined communications protocol, wherein said first television receiver (10) includes:
a communication unit (870) configured to perform transmission or reception of a signal to or from said communication control device according to said predefined communications protocol,
a display unit (830) configured to display an image,
a storing unit (852) configured to store first device information identifying said first television receiver and a registry information identifying a user of said first television receiver,
an input unit (806, 808) configured to accept input of an operation instruction, and
a transmission controller (810) configured to control said communication unit to transmit said first device information, said registry information and channel information specifying a channel selected for displaying an image on said display unit to said communication control device;
said communication control device obtains said first device information, said registry information and said channel information from the signal received from said first television receiver, and stores said first device information and said channel information in a related manner;
said second television receiver (20) includes:
a communication unit (1170) configured to transmit or receive a signal to or from said communication control device according to said predefined communications protocol,
a storing unit (1112) configured to store said first device information identifying said first television receiver, second device information identifying said second television receiver and position data for specifying a position of said second television receiver on said communication line,
an input unit (1106) configured to accept input of an obtaining instruction for information representing a display situation of an image of said first television receiver,
a producing unit (1110) configured to produce a transmission request for the information representing said display situation in response to the input of said obtaining instruction, said transmission request including said first device information, and
a transmission controller (S 1880) configured to control said communication unit to transmit said position data and said transmission request to said communication control device according to said communications protocol;
said communication control device further obtains said transmission request and said position data from the signal received by said second television receiver, and transmits said registry information and said channel information to said second television receiver based on said first device information included in said transmission request and said position data; and
said second television receiver (20) further includes:
an obtaining unit (1024) configured to obtain said registry information and said channel information from the signal transmitted from said communication control device, and
a display unit (1012) configured to display said registry information and said channel information.

15. The system according to claim 14, wherein
said communications protocol is an Internet protocol.

16. The system according to claim 14, wherein
in said first television receiver,
said input unit accepts input of identification data for identifying a user of said first television receiver;
said first television receiver further includes:
an obtaining unit configured to obtain said identification data from the input of said operation instruction, and
a determining unit configured to determine whether the viewer providing said operation instruction is registered in said first television receiver or not, based on said registry information stored in said storing unit and said obtained identification data; and
said transmission controller controls said communication unit to transmit said first device information, said registry information corresponding to said registered user and said channel information to said communication control device when said viewer is registered in said first television receiver.
